# EUROPÄISCHE PATENTANMELDUNG

(11) **EP 3 136 126 A1**
(43) Veröffentlichungstag der Anmeldung: **01.03.2017**
(21) Anmeldenummer: 16184267.9
(22) Anmeldetag: 16.08.2016
(51) Int. Cl.: G01S 15/93, G01S 7/521, G10K 9/122, G10K 11/00, H04R 7/12, H04R 31/00, G01S 15/87, B21D 51/16

(54) **VERFAHREN ZUM HERSTELLEN EINER MEMBRAN EINES ULTRASCHALLSENSORS AUS EINEM BODENKÖRPER UND EINEM MANTELKÖRPER, MEMBRAN, ULTRASCHALLSENSOR SOWIE KRAFTFAHRZEUG**

(30) Priorität: 24.08.2015 DE 102015113994
(71) Anmelder: Valeo Schalter und Sensoren GmbH, 74321 Bietigheim-Bissingen (DE)
(72) Erfinder: Kupfernagel, Uwe, 74321 Bietigheim-Bissingen (DE); Fößel, Jochen, 74321 Bietigheim-Bissingen (DE)

(57) **Zusammenfassung**

Die Erfindung betrifft ein Verfahren zum Herstellen einer Membran (9) eines Ultraschallsensors (4) für ein Kraftfahrzeug (1), bei welchem ein Bodenkörper (10) hergestellt wird, ein im Wesentlichen hohlzylinderförmiger Mantelkörper (11) hergestellt wird und der Bodenkörper (10) und der Mantelkörper (11) miteinander zu der Membran (9) verbunden werden, wobei die Membran (9) im Wesentlichen topfförmig ausgebildet ist, wobei der Bodenkörper (10) in einem Randbereich (19) derart umgeformt wird, dass der Bodenkörper (10) und der Mantelkörper (11) formschlüssig und/oder kraftschlüssig miteinander verbunden sind.

## Beschreibung

Die vorliegende Erfindung betrifft ein Verfahren zum Herstellen einer Membran eines Ultraschallsensors für ein Kraftfahrzeug, bei welchem ein Bodenkörper hergestellt wird, ein im Wesentlichen hohlzylinderförmiger Mantelkörper hergestellt wird und der Bodenkörper und der Mantelkörper miteinander zu der Membran verbunden werden, wobei die Membran im Wesentlichen topfförmig ausgebildet ist. Darüber hinaus betrifft die vorliegende Erfindung eine Membran für einen Ultraschallsensor eines Kraftfahrzeugs. Ferner betrifft die vorliegende Erfindung einen Ultraschallsensor sowie ein Kraftfahrzeug.

Das Interesse richtet sich vorliegend auf Ultraschallsensoren für Kraftfahrzeuge. Derartige Ultraschallsensoren können beispielsweise Teil eines Fahrerassistenzsystems sein, welches den Fahrer beim Führen des Kraftfahrzeugs unterstützt. Beispielsweise kann das Fahrerassistenzsystem als Parkhilfesystem ausgebildet sein, das eine Mehrzahl von Ultraschallsensoren umfasst, die verteilt an dem Kraftfahrzeug angeordnet sind. Die jeweiligen Ultraschallsensoren sind insbesondere dazu ausgelegt, einen Abstand zu einem Objekt beziehungsweise Hindernis in einem Umgebungsbereich des Kraftfahrzeugs zu bestimmen.

Ein solcher Ultraschallsensor umfasst üblicherweise eine Membran, die beispielsweise topfförmig ausgebildet sein kann und aus Aluminium gebildet sein kann. Die Membran umfasst einen Membranboden und eine Membranwand. Auf einer Rückseite des Membranbodens ist üblicherweise ein piezoelektrisches Element angeordnet, mit dem der Membranboden zu mechanischen Schwingungen angeregt werden kann. In Folge der Anregung der Membran wird mit der Membran ein Ultraschallsignal ausgesendet. Dieses Ultraschallsignal trifft dann auf das Objekt in dem Umgebungsbereich des Kraftfahrzeugs und wird von diesem zu dem Ultraschallsensor zurück reflektiert. Das reflektierte Ultraschallsignal bewirkt eine mechanische Schwingung des Membranbodens, die wiederum mit dem piezoelektrischen Element erfasst werden kann.

Zur Herstellung der Membran des Ultraschallsensors sind aus dem Stand der Technik unterschiedliche Varianten bekannt. Beispielsweise ist es bekannt, dass die Membran aus einem einzigen Bauteil hergestellt wird. Alternativ dazu ist es bekannt, dass die Membran aus zwei separaten Bauteilen, nämlich einem Bodenkörper und einem im Wesentlichen hohlzylinderförmigen Mantelkörper hergestellt wird. Dabei kann es grundsätzlich vorgesehen sein, dass der Bodenkörper und der Mantelkörper aus unterschiedlichen Materialien gebildet sind. In diesem Fall ist es beispielsweise vorgesehen, dass der Bodenkörper und der Mantelkörper mittels eines Klebeprozesses und/oder eines Fügeprozesses miteinander verbunden werden. Alternativ dazu sind auch Prozesse wie Laserschweißen oder Ultraschallschweißen denkbar, um den Bodenkörper und den Mantelkörper miteinander zu verbinden. Diese Prozesse weisen allerdings den Nachteil auf, dass diese üblicherweise aufwendig und teuer sind.

Hierzu beschreibt die DE 2010 044 995 A1 einen Ultraschallwandler für eine Fahrerassistenzeinrichtung, welche eine Membran aufweist. Die Membran umfasst einen Boden aus einem ersten Material und einem mit dem Boden verbundenen Hohlkörper aus einem zum ersten unterschiedlichen zweiten Material. Dabei ist es insbesondere vorgesehen, dass der Boden der Membran mit dem Hohlkörper der Membran durch Klebestellen verbunden ist.

Es ist Aufgabe der vorliegenden Erfindung, eine Lösung aufzuzeigen, wie eine Membran für einen Ultraschallsensor eines Kraftfahrzeugs einfacher und kostengünstiger hergestellt werden kann.

Diese Aufgabe wird erfindungsgemäß durch ein Verfahren, durch eine Membran, durch einen Ultraschallsensor sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche, der Beschreibung und der Figuren.

Ein erfindungsgemäßes Verfahren dient zum Herstellen einer Membran eines Ultraschallsensors für ein Kraftfahrzeug. Hierbei wird ein Bodenkörper hergestellt. Darüber hinaus wird ein im Wesentlichen hohlzylinderförmiger Mantelkörper hergestellt. Anschließend werden der Bodenkörper und der Mantelkörper miteinander zu der Membran verbunden, wobei die Membran im Wesentlichen topfförmig ausgebildet ist. Zudem wird der Bodenkörper in einem Randbereich derart umgeformt, dass der Bodenkörper und der Mantelkörper formschlüssig und/oder kraftschlüssig miteinander verbunden sind.

Vorliegend soll eine Membran für einen Ultraschallsensor eines Kraftfahrzeugs hergestellt werden. Die Membran wird vorliegend aus zwei separaten Bauteilen hergestellt, nämlich dem Bodenkörper und dem Mantelkörper. Der Bodenkörper kann beispielsweise im Wesentlichen plattenförmig ausgebildet sein. Insbesondere kann es vorgesehen sein, dass der Bodenkörper im Wesentlichen runden ausgebildet ist. Der Mantelkörper ist im Wesentlichen hohlzylinderförmig ausgebildet. Der Bodenkörper und der Mantelkörper werden zu der topfförmigen Membran verbunden. Dabei bildet der Bodenkörper zumindest bereichsweise den Membranboden und der Mantelkörper bildet zumindest bereichsweise die Membranwand. An einer Innenseite des Membranbodens kann ein entsprechendes Wandlerelement, beispielsweise ein piezoelektrisches Element, angeordnet sein. Zum Aussenden des Ultraschallsignals kann das Wandlerelement und somit auch der Membranboden zu mechanischen Schwingungen angeregt werden. Ferner kann mit dem Membranboden wieder ein Ultraschallsignal, das von einem Objekt reflektiert wird, empfangen werden. In Folge des reflektierten Ultraschallsignals wird der Membranboden zu mechanischen Schwingungen angeregt. Diese werden ebenso auf das Wandlerelement übertragen und können beispielsweise in Form einer elektrischen Spannung ausgegeben werden.

Erfindungsgemäß ist es nun vorgesehen, dass der Bodenkörper in einem vorbestimmten Randbereich derart umgeformt wird, dass der Bodenkörper und der Mantelkörper formschlüssig und/oder kraftschlüssig miteinander verbunden sind. Insbesondere ist es vorgesehen, dass der Bodenkörper durch Verstemmen oder durch Verprägen mit dem Mantelkörper verbunden wird. Somit kann auf einfache und kostengünstige Weise ein Herstellungsprozess zum Fertigen der Membran bereitgestellt werden. Bei dem Herstellungsverfahren kann insbesondere auf Klebeprozesse und/oder Fügeprozesse verzichtet werden, welche zusätzliche Kosten und Aufwand mit sich bringen. Zudem kann durch die Ausgestaltung des Umformprozesses die mechanischen Eigenschaften des Bodenkörpers und somit auch des Membranbodens beeinflusst werden. Damit werden eine Justierung und eine Änderung der Richtcharakteristik des Ultraschallsensors ermöglicht.

Bevorzugt wird an einer Außenseite des Mantelkörpers ein Hinterschnitt ausgebildet und der Randbereich des Bodenkörpers wird derart umgeformt, dass der Randbereich mit dem Hinterschnitt des Mantelkörpers zumindest bereichsweise in Anlage ist. An der Außenseite des Mantelkörpers, die dem Verbindungsbereich zugeordnet ist, in dem der Mantelkörper mit dem Bodenkörper verbunden werden soll, weist der Mantelkörper einen Hinterschnitt auf. Mit anderen Worten ist an der Außenseite des Mantelkörpers eine Ausnehmung vorgesehen. Diese Ausnehmung ist derart ausgebildet, dass diese in einem ersten Bereich, der dem Bodenkörper zugeordnet ist, im Vergleich zu einem zweiten Bereich, der weiter von dem Bodenkörper entfernt ist als der erste Bereich, einen größeren Außendurchmesser aufweist. Der Bodenkörper, der beispielsweise im Wesentlichen als rundes Plättchen ausgebildet ist, wird in dem Randbereich umgeformt, sodass dieser mit dem Hinterschnitt in Anlage ist. Somit kann auf einfache Weise eine formschlüssige und/oder kraftschlüssige Verbindung zwischen dem Bodenkörper und dem Mantelkörper bereitgestellt werden.

In einer weiteren Ausführungsform wird zwischen einer Stirnseite des Mantelkörpers und dem Bodenkörper ein Dichtungselement zum Abdichten eines Zwischenraums zwischen dem Mantelkörper und dem Bodenkörper ausgebildet. Dabei ist die Stirnseite des Mantelkörpers insbesondere dem Bereich des Bodenkörpers zugeordnet, welcher von dem Randbereich verschiedenen ist, wenn der Bodenkörper und der Mantelkörper verbunden sind. Mit anderen Worten wird auf der Stirnseite beziehungsweise der Oberseite des Mantelkörpers ein Dichtelement angeordnet. Mit diesem Dichtelement kann der Zwischenraum zwischen dem Bodenkörper und dem Mantelkörper abgedichtet werden. Somit kann verhindert werden, dass durch den Zwischenraum zwischen dem Mantelkörper und dem Bodenkörper Schmutz, Staub und/oder Flüssigkeiten in den Innenraum der Membran gelangen. Auf diese Weise kann ein zuverlässiger Betrieb des Ultraschallsensors ermöglicht werden. Weiterhin kann es vorgesehen sein, dass das Dichtungselement aus einem schwingungsdämpfenden Material hergestellt ist. Somit kann beispielsweise verhindert werden, dass mechanische Schwingungen und/oder Körperschall im Betrieb des Ultraschallsensors von dem Bodenkörper auf den Mantelkörper übertragen werden.

In einer Ausgestaltung wird das Dichtungselement als separates Bauteil hergestellt und in dem Zwischenraum zwischen dem Mantelkörper und dem Bodenkörper angeordnet. Das Dichtungselement kann nach Art eines Dichtungsrings beziehungsweise eines O-Rings ausgebildet sein. Bei der Herstellung der Membran kann das Dichtungselement zwischen dem Mantelkörper und dem Bodenkörper angeordnet werden und anschließend kann dann der Bodenkörper in dem Randbereich umgeformt werden. Dies ermöglicht eine einfache und kostengünstige Herstellung der Membran des Ultraschallsensors.

In einer weiteren Ausgestaltung wird zum Ausbilden des Dichtungselements vor dem Umformen des Randbereichs des Bodenkörpers ein Dichtmaterial auf dem Bodenkörper aufgebracht. Der Bodenkörper kann beispielsweise aus einem entsprechenden Metallblech ausgestanzt werden. Anschließend kann ein entsprechendes Dichtmaterial beziehungsweise eine Dichtmasse zumindest bereichsweise auf dem Bodenkörper aufgebracht werden. Insbesondere wird das Dichtmaterial auf den Bereich des Bodenkörpers aufgebracht, der anschließend mit der Stirnseite des Mantelkörpers verbunden wird. Das Dichtmaterial kann beispielsweise mittels eines entsprechenden Spritzverfahrens auf dem Bodenkörper aufgebracht werden. Gegebenenfalls kann das Dichtmaterial anschließend ausgehärtet werden. Somit kann erreicht werden, dass das Dichtmaterial und somit das Dichtungselement mit dem Bodenkörper verbunden ist. Somit kann beispielsweise bei der Herstellung der Membran verhindert werden, dass das Dichtungselement während des Herstellungsprozesses verrutscht.

Bevorzugt ist der Bodenkörper und/oder der Mantelkörper aus einem elektrisch leitfähigen Material, insbesondere einem Material, hergestellt. Der Bodenkörper und/oder der Mantelkörper können beispielsweise aus Aluminium hergestellt sein. Wie bereits erläutert, kann der Bodenkörper als Stanz- und Biegeteil hergestellt sein. Der Mantelkörper kann beispielsweise aus Aluminium durch Fließpressen hergestellt sein. Grundsätzlich können der Bodenkörper und der Mantelkörper aus unterschiedlichen Materialien gebildet sein.

Weiterhin ist es vorteilhaft, wenn der Bodenkörper und/oder der Mantelkörper zumindest bereichsweise mittels eines galvanischen Verfahrens beschichtet werden. Mit anderen Worten kann mittels Galvanik eine entsprechende Schutzschicht auf dem Bodenkörper und/oder dem Mantelkörper aufgebracht werden. Somit kann der Bodenkörper und/oder der Mantelkörper vor Umwelteinflüssen und somit beispielsweise vor Korrosion geschützt werden.

In einer weiteren Ausgestaltung wird der Bodenkörper und/oder der Mantelkörper zumindest bereichsweise mittels eines elektrostatischen Spritzverfahrens lackiert. Bei dem elektrostatischen Spritzverfahren wird ein elektrostatisches Hochspannungsfeld genutzt, um entsprechende Pulverlacke auf dem Bodenkörper und/oder dem Mantelkörper aufzubringen. Des Weiteren kann insbesondere das sogenannte Coil-Coating verwendet werden, um den Bodenkörper und/oder den Mantelkörper zu beschichten. Grundsätzlich kann es auch vorgesehen sein, dass das sogenannte KTL-Verfahren (KTL - Kathodische Elektrotauchlackierung) verwendet wird, um eine Schutzschicht auf den Bodenkörper und/oder den Mantelkörper aufzubringen. Auf diese Weise kann erreicht werden, dass der Bodenkörper und/oder der Membrankörper besonders robust gegenüber Umwelteinflüssen ist.

Eine erfindungsgemäße Membran für einen Ultraschallsensor eines Kraftfahrzeugs umfasst einen Bodenkörper und einen im Wesentlichen hohlzylinderförmigen Mantelkörper, welche zu der Membran verbunden sind, wobei die Membran im Wesentlichen topfförmig ausgebildet ist. Dabei ist der Bodenkörper in einem Randbereich derart umgeformt, dass der Bodenkörper und der Mantelkörper formschlüssig und/oder kraftschlüssig miteinander verbunden sind.

Ein erfindungsgemäßer Ultraschallsensor für ein Kraftfahrzeug umfasst eine erfindungsgemäße Membran. Dabei kann an einer Innenseite des Membranbodens beziehungsweise des Bodenkörpers ein Wandlerelement angeordnet sein. Zudem kann innerhalb der Membran die Ansteuerelektronik für den Ultraschallsensor angeordnet sein. Die Membran kann gleichzeitig das Gehäuse des Ultraschallsensors bilden.

Ein erfindungsgemäßes Kraftfahrzeug umfasst zumindest einen erfindungsgemäßen Ultraschallsensor. Insbesondere kann das Kraftfahrzeug eine Vielzahl von Ultraschallsensoren umfassen, die beispielsweise verteilt an dem Kraftfahrzeug angeordnet sind. Hierbei kann es beispielsweise vorgesehen sein, dass die Ultraschallsensoren an den Stoßfängern des Kraftfahrzeugs angeordnet sind. Die Ultraschallsensoren können beispielsweise Teil eines Fahrerassistenzsystems des Kraftfahrzeugs sein. Dabei kann mithilfe der Ultraschallsensoren ein Objekt beziehungsweise ein Hindernis in dem Umgebungsbereich des Kraftfahrzeugs erfasst werden. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Membran, den erfindungsgemäßen Ultraschallsensor sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem mit mehreren Ultraschallsensoren aufweist;
- Fig. 2: eine Membran eines Ultraschallsensors in einer Seitenansicht; und
- Fig. 3: einen Ausschnitt der Membran gemäß Fig. 2 in einer geschnittenen Seitenansicht.

In den Figuren werden gleiche und funktionsgleiche Elemente mit den gleichen Bezugszeichen versehen.

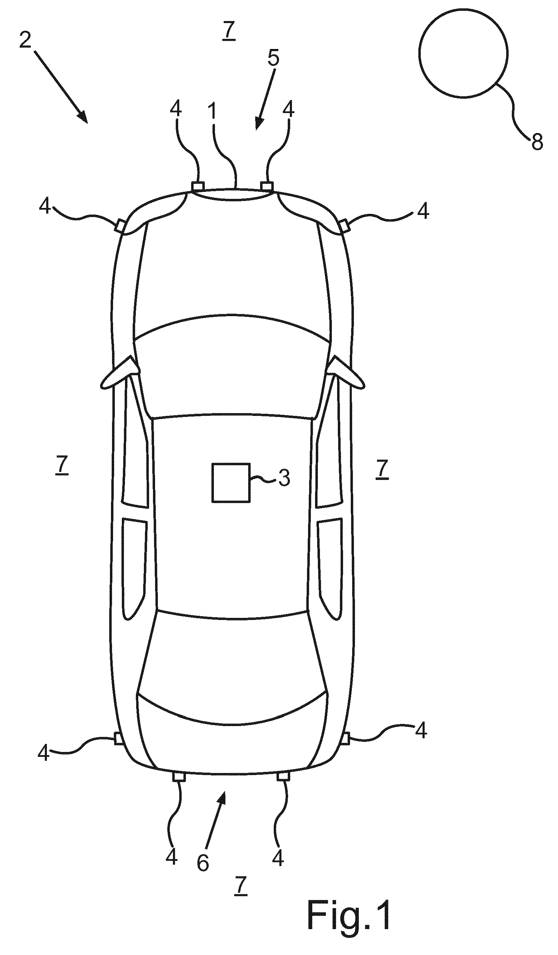

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, welche beispielsweise durch ein elektronisches Steuergerät (ECU - Electronic Control Unit) des Kraftfahrzeugs 1 gebildet sein kann. Darüber hinaus umfasst das Fahrerassistenzsystem 2 zumindest einen Ultraschallsensor 4.

Vorliegend umfasst das Fahrerassistenzsystem 2 acht Ultraschallsensoren 4, die verteilt an dem Kraftfahrzeug 1 angeordnet sind. Dabei sind vier Ultraschallsensoren 4 an einem Frontbereich 5 des Kraftfahrzeugs 1 und vier Ultraschallsensoren 4 an einem Heckbereich 6 des Kraftfahrzeugs 1 angeordnet. Die Ultraschallsensoren 4 sind dazu ausgebildet, zumindest ein Objekt 8 in einem Umgebungsbereich 7 des Kraftfahrzeugs 1 zu erfassen. Die Ultraschallsensoren 4 dienen insbesondere dazu, eine relative Lage zwischen dem Objekt 8 und dem Kraftfahrzeug 1 zu bestimmen. Die Ultraschallsensoren 4 können beispielsweise an entsprechenden Durchgangsöffnungen in den Stoßfängern des Kraftfahrzeugs 1 angeordnet sein. Es kann auch vorgesehen sein, dass die Ultraschallsensoren 4 verdeckt hinter den Stoßfängern angeordnet sind.

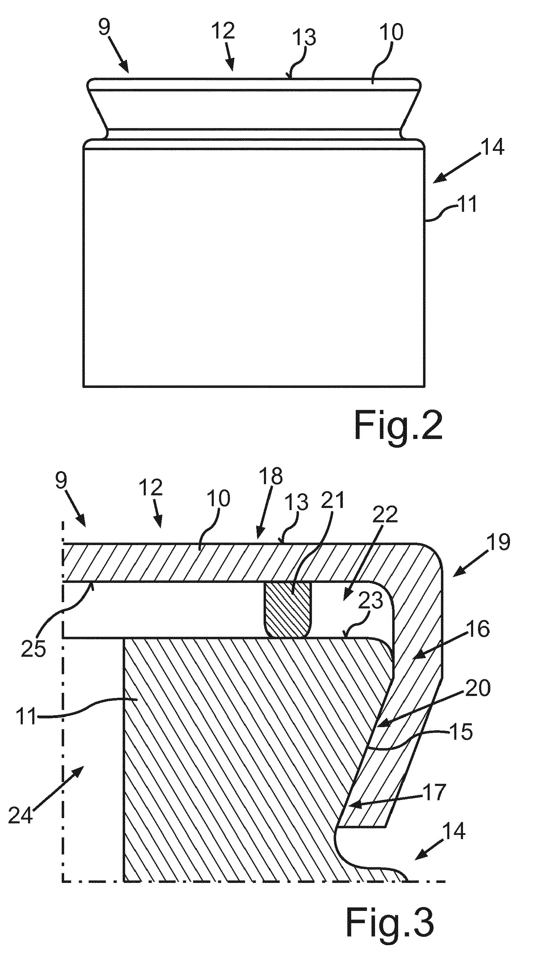

Fig. 2 zeigt eine Membran 9 eines Ultraschallsensors 4 gemäß einer Ausführungsform der vorliegenden Erfindung in einer Seitenansicht. Die Membran 9 ist im Wesentlichen topfförmig ausgebildet. Dabei ist die Membran 9 ist aus zwei Bauteilen hergestellt, nämlich einem Bodenkörper 10 und einem Mantelkörper 11. Der Bodenkörper 10 und der Mantelkörper 11 können beispielsweise aus einem elektrisch leitfähigen Material, insbesondere einem Metall, hergestellt sein. Zudem können der Bodenkörper 10 und/oder der Mantelkörpers 11 mittels eines galvanischen Verfahrens beschichtet sein oder mittels eines elektrostatischen Spritzverfahrens lackiert sein. Somit kann die Membran 9 vor Umwelteinflüssen geschützt werden.

Die Membran 9 weist einen Membranboden 12 auf, der durch den Bodenkörper 10 gebildet ist. Der Membranboden 12 weist eine Vorderseite 13 auf, ausgehend von welcher ein Ultraschallsignal ausgesendet werden kann. Hierzu kann auf einer der Vorderseite 13 gegenüberliegenden Rückseite 25 des Membranbodens 12 ein Wandlerelement, insbesondere ein piezoelektrisches Element, angeordnet sein. Mit diesem Wandlerelement kann der Membranboden 12 zu mechanischen Schwingungen angeregt werden. Darüber hinaus umfasst die Membran 9 eine Membranwand 14, welche zumindest bereichsweise durch den Mantelkörper 11 gebildet ist. Der im Wesentlichen hohlzylinderförmig ausgebildete Mantelkörper 11 beziehungsweise die Membranwand 14 können zumindest einen Teil des Gehäuses des Ultraschallsensors 4 bilden. Innerhalb der Membran 9 kann neben dem Wandlerelement auch die Ansteuerelektronik zum Ansteuern des Wandlerelements angeordnet sein.

Fig. 3 zeigt eine ausschnittsweise Darstellung der Membran 9 gemäß Fig. 2 in einer geschnittenen Seitenansicht. Hierbei ist zu erkennen, dass der Mantelkörper 11 an einer Außenseite 15 einen Hinterschnitt aufweist. Der Mantelkörper 11 ist im Wesentlichen rotationssymmetrisch ausgebildet. In einem ersten Bereich 16, welcher dem Bodenkörper 10 zugeordnet ist, weist der Mantelkörper 11 einen ersten Durchmesser auf. In einem zweiten Bereich 17, der von dem Bodenkörper 10 weiter beabstandet ist als der erste Bereich 16, weist der Mantelkörper 11 einen zweiten Durchmesser auf. Dabei ist der erste Durchmesser in dem ersten Bereich 16 größer als der zweite Durchmesser in dem zweiten Bereich 17.

Der Bodenkörper 10 weist einen Bodenbereich 18 auf, welcher den Membranboden 12 bildet. Zudem weist der Bodenkörper 10 einen Randbereich 19 auf, welcher umgeformt ist. Vorliegend sind der Mantelkörper 11 und der Bodenkörper 10 durch Verstemmen miteinander verbunden. Dabei ist der Randbereich 19 des Bodenkörpers derart umgeformt, dass dieser mit dem Hinterschnitt 20 des Mantelkörpers 11 in Anlage ist. Somit kann auf einfache Weise eine formschlüssige und/oder kraftschlüssige Verbindung zwischen dem Bodenkörper 10 und dem Mantelkörper 11 erreicht werden.

Darüber hinaus umfasst die Membran 9 ein Dichtungselement 21, welches in einem Zwischenraum 22 zwischen einer Stirnseite 23 des Mantelkörpers 11 und dem Bodenbereich 18 des Bodenkörpers 10 angeordnet ist. Durch das Dichtungselement 21 kann verhindert werden, dass Schmutzpartikel und/oder Flüssigkeiten durch den Zwischenraum 22 in einen Innenraum 24 der Membran 9 gelangen können. Das Dichtungselement 21 kann als separates Bauteil ausgebildet werden und zwischen dem Bodenkörper 10 und dem Mantelkörper 11 angeordnet werden. Es kann auch vorgesehen sein, dass zum Bereitstellen des Dichtungselements 21 ein Dichtungsmaterial auf dem Bodenbereich 18 beziehungsweise eine Rückseite 25 des Membranbodens 12 aufgebracht wird. Somit kann insgesamt ein einfaches und kostengünstiges Verfahren zum Herstellen der Membran 9 für den Ultraschallsensor 4 ermöglicht werden.

## Patentansprüche

1. Verfahren zum Herstellen einer Membran (9) eines Ultraschallsensors (4) für ein Kraftfahrzeug (1), bei welchem ein Bodenkörper (10) hergestellt wird, ein im Wesentlichen hohlzylinderförmiger Mantelkörper (11) hergestellt wird und der Bodenkörper (10) und der Mantelkörper (11) miteinander zu der Membran (9) verbunden werden, wobei die Membran (9) im Wesentlichen topfförmig ausgebildet ist,
**dadurch gekennzeichnet, dass**
der Bodenkörper (10) in einem Randbereich (19) derart umgeformt wird, dass der Bodenkörper (10) und der Mantelkörper (11) formschlüssig und/oder kraftschlüssig miteinander verbunden sind.

2. Verfahren nach Anspruch 1,
**dadurch gekennzeichnet, dass**
an einer Außenseite (15) des Mantelkörpers (11) ein Hinterschnitt (20) ausgebildet wird und der Randbereich (18) des Bodenkörpers (10) derart umgeformt wird, dass der Randbereich (18) mit dem Hinterschnitt (20) des Mantelkörpers (11) zumindest bereichsweise in Anlage ist.

3. Verfahren nach Anspruch 1 oder 2,
**dadurch gekennzeichnet, dass**
zwischen einer Stirnseite (23) des Mantelkörpers (11) und dem Bodenkörper (10) ein Dichtungselement (21) zum Abdichten eines Zwischenraums (22) zwischen dem Mantelkörper (11) und dem Bodenkörper (10) ausgebildet wird.

4. Verfahren nach Anspruch 3,
**dadurch gekennzeichnet, dass**
das Dichtungselement (21) als separates Bauteil hergestellt wird und in dem Zwischenraum (22) zwischen dem Mantelkörper (11) und dem Bodenkörper (10) angeordnet wird.

5. Verfahren nach Anspruch 3,
**dadurch gekennzeichnet, dass**
zum Ausbilden des Dichtungselements (21) vor dem Umformen des Randbereichs (18) des Bodenkörpers (10) ein Dichtmaterial auf den Bodenkörper (10) aufgebracht wird.

6. Verfahren nach einem der vorhergehenden Ansprüche,
**dadurch gekennzeichnet, dass**
der Bodenkörper (10) und/oder der Mantelkörper (11) aus einem elektrisch leitfähigen Material, insbesondere einem Metall, hergestellt werden.

7. Verfahren nach Anspruch 6,
**dadurch gekennzeichnet, dass**
der Bodenkörper (10) und/oder der Mantelkörper (11) zumindest bereichsweise mittels eines galvanischen Verfahrens beschichtet werden.

8. Verfahren nach Anspruch 6,
**dadurch gekennzeichnet, dass**
der Bodenkörper (10) und/oder der Mantelkörper (11) zumindest bereichsweise mittels eines elektrostatischen Spritzverfahrens lackiert werden.

9. Membran (9) für einen Ultraschallsensor (4) eines Kraftfahrzeugs (1), mit einem Bodenkörper (10) und mit einem im Wesentlichen hohlzylinderförmigen Mantelkörper (11), welche zu der Membran (9) verbunden sind, wobei die Membran (9) im Wesentlichen topfförmig ausgebildet ist,
**dadurch gekennzeichnet, dass**
der Bodenkörper (10) in einem Randbereich (18) derart umgeformt ist, dass der Bodenkörper (10) und der Mantelkörper (11) formschlüssig und/oder kraftschlüssig miteinander verbunden sind.

10. Ultraschallsensor (4) für ein Kraftfahrzeug (1) mit einer Membran (9) nach Anspruch 9.

11. Kraftfahrzeug (1) mit zumindest einem Ultraschallsensor (4) nach Anspruch 10.
